# EUROPÄISCHE PATENTSCHRIFT

(11) **EP 0 618 092 B1**
(45) Veröffentlichungstag und Bekanntmachung des Hinweises auf die Patenterteilung: **03.07.1996**
(21) Anmeldenummer: 94890060.0
(22) Anmeldetag: 21.03.1994
(51) Int. Cl.: B60C 11/12

(54) **Fahrzeugreifen**
Vehicle tyre
Bandage pneumatique pour véhicule

(30) Priorität: 01.04.1993 AT 661/93
(43) Veröffentlichungstag der Anmeldung: 05.10.1994
(73) Patentinhaber: Semperit Reifen Aktiengesellschaft, A-2514 Traiskirchen (AT)
(72) Erfinder: Liederer, Werner, Dr., A-2514 Traiskirchen (AT)
(74) Vertreter: Vinazzer, Edith

(56) Entgegenhaltungen:
- EP-A- 0 330 643
- GB-A- 867 556
- GB-A- 869 980

## Beschreibung

Die vorliegende Erfindung betrifft einen insbesondere für den Wintereinsatz vorgesehenen Fahrzeugreifen mit einem Laufstreifenprofil, welches Profilelemente, wie Profilblöcke oder in Reifenumfangsrichtung verlaufende Laufstreifenbänder aufweist, die mit einer Vielzahl von Feineinschnitten versehen sind.

Fahrzeugluftreifen mit Laufstreifenprofilen, deren Profilelemente mit einer Vielzahl von Feineinschnitten versehen sind, haben sich in den letzten Jahren, insbesondere im Einsatz unter winterlichen Fahrbedingungen auf schneeigem oder eisigem Untergrund sehr gut bewährt. Ein derartiger Fahrzeugreifen ist beispielsweise aus der AT-B 390.915 bekannt. Das Laufstreifenprofil dieses Fahrzeugluftreifens besitzt eine entlang der Mittelumfangslinie des Profiles umlaufende Profilrippe sowie seitlich dieser Rippe je zwei sich aus in Umfangsrichtung aneinandergereihten Profilblöcken zusammensetzende Blockreihen. Sowohl die Mittelrippe als auch die Profilblöcke in den Blockreihen sind jeweils mit einer Anzahl von über die Blockbreite bzw. die Rippenbreite durchgehend verlaufenden Feineinschnitten versehen. Diese Feineinschnitte verlaufen im wesentlichen parallel zueinander und sind auch im wesentlichen voneinander gleich beabstandet. Die Feineinschnitte sind ferner in Axialrichtung orientiert, derart, daß sie über einen Großteil ihrer Länge einen Winkel von ca. 30° mit der Axialrichtung einschließen. Reifen mit einem derartigen Laufstreifenprofil haben im allgemeinen gute Griffeigenschaften. Die ausgeprägte Ausrichtung der Feineinschnitte in Axialrichtung bewirkt jedoch, daß die Profilblöcke in Umfangsrichtung eine relativ niedrige Biegesteifigkeit, in Querrichtung jedoch eine eher hohe Biegesteifigkeit aufweisen, was die Übertragung von Antriebs- und Bremskräften sowie das Fahrverhalten, insbesondere beim Kurvenfahren, beeinträchtigt.

Die Erfindung hat sich daher die Aufgabe gestellt, im Laufstreifen Profilelemente so zu gestalten, daß bei weiterhin guten Griffeigenschaften eine hohe Biegesteifigkeit sowohl in Umfangs- als auch in Querrichtung gewährleistet ist, wobei durch die gesetzten Maßnahmen auch eine Beeinflussung der Biegesteifigkeit in der einen oder der anderen Richtung möglich sein soll.

Gelöst wird die gestellte Aufgabe erfindungsgemäß dadurch, daß Profilelemte mit Feineinschnitten vorgesehen sind, durch die Einzelelemente mit einer zumindest annähernd Doppel-T-Träger-förmigen Gestalt gebildet sind.
Nach der Erfindung sind demnach in Profilelementen Feineinschnitte derart angeordnet, daß sie, in Draufsicht betrachtet, zumindest annähernd der Kontur eines Doppel-T-Trägers folgen. Dadurch bilden diese Feineinschnitte Einzelelemente, die eine hohe Biegesteifigkeit sowohl in Umfangsrichtung als auch in Axialrichtung aufweisen, was dem gesamten Profilelement eine hohe Biegesteifigkeit in Umfangs- und in Querrichtung verleiht. Gleichzeitig ist eine gute Übertragung von Antriebs- und von Bremskräften gewährleistet und eine positive Auswirkung auf das Fahrverhalten gegeben. Die Feineinschnittdichte im Profilblock kann zur Schaffung der erwünschten Anzahl von Griffkanten weiterhin hoch sein.

Gemäß einer bevorzugten Ausführungsform der Erfindung sind im Laufstreifenprofil Profilblöcke angeordnet, die ein einziges Einzelelement mit einer zumindest annähernd Doppel-T-Träger-förmigen Gestalt aufweisen.

Bei einer weiteren Ausführungform der Erfindung weist das Laufstreifenprofil Profilblöcke auf, die jeweils mehrere Einzelelemente mit einer zumindest annähernd Doppel-T-Träger-förmigen Gestalt aufweisen, wobei jeweils zumindest zwei Einzelelemente derart angeordnet sind, daß ein Balkenteil im Freiraum zwischen den Balkenteilen des zweiten Einzelelementes liegt. Durch diese Anordnung kann auf rationelle Weise eine höhere Anzahl von Griffkanten geschaffen werden.

Bei einer anderen Ausführungsform der Erfindung ist im Laufstreifenprofil zumindest ein Laufstreifenband angeordnet, in welchem die zumindest annähernd Doppel-T-Träger-förmigen Einzelelemente in zwei in Umfangsrichtung verlaufenden Reihen angeordnet sind, wobei innerhalb jeder Reihe die Doppel-T-Träger-Einzelelemnte unmittelbar aneinander anschließen und je zwei Balkenteile von in der einen Reihe in Umfangsrichtung unmittelbar aufeinanderfolgenden Einzelelementen paßgenau zwischen den Balkenteilen der Einzelelemente der anderen Reihe angeordnet sind.

Diese Anordnung ist für ein Laufstreifenband besonders vorteilhaft, da dadurch der Effekt der Erhöhung der Biegesteifigkeit sehr gut zum Tragen kommt.

Um möglichst ausgewogene Volumsverhältnisse im Profilblock bzw. im Laufstreifenband zu schaffen ist es ferner von Vorteil, wenn die Profilblockkanten bzw. die Laufstreifenbandkanten zum Teil die Außenkonturen der Doppel-T-Träger-förmigen Einzelelemente bilden.

Bei einer bevorzugten Ausführungsform der Erfindung sind die innerhalb eines Profilblockes oder eines Laufstreifenbandes angeordneten Doppel-T-Träger-förmigen Einzelelemente zumindest im wesentlichen gleich dimensioniert.

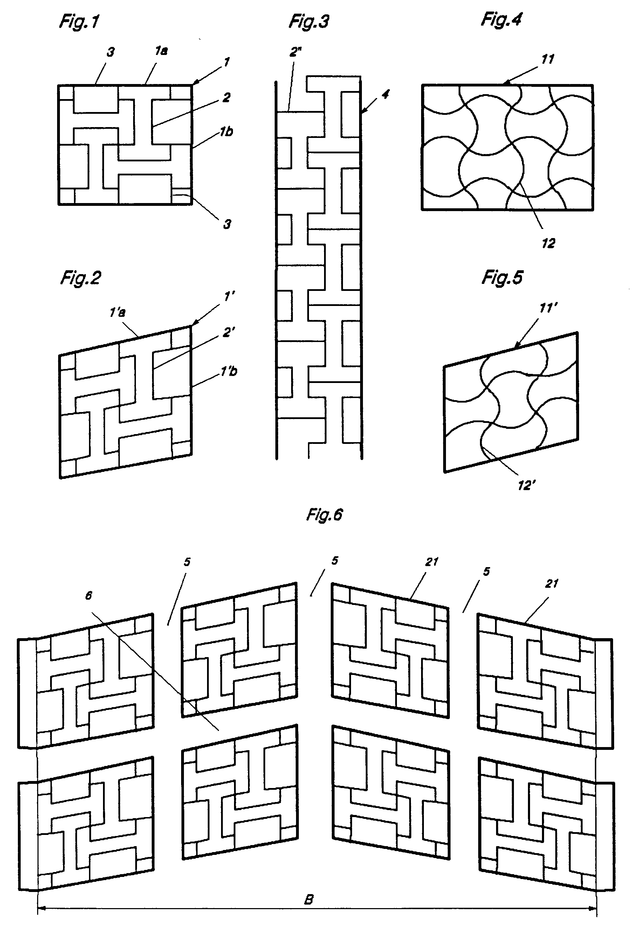

Weitere Merkmale, Vorteile und Einzelheiten der Erfindung werden nun anhand der Zeichnung, die mehrere Ausführungsbeispiele der Erfindung in schematischer Darstellung enthält, beschrieben. Dabei zeigt Fig. 1 eine Draufsicht auf einen rechteckigen Profilblock mit einer ersten Ausführungsform der Erfindung, Fig. 2 eine Abwandlung der Ausführungsform nach Fig. 1 bei einem parallelogrammförmigen Profilblock, Fig. 3 eine Draufsicht auf einen Abschnitt eines Profilbandes mit einer weiteren Ausführungsvariante, Fig. 4 und Fig. 5 eine weitere Ausführungsvariante der Erfindung in zu Fig. 1 und Fig. 2 analoger Darstellung und Fig. 6 eine schematische Draufsicht auf eine Teilabwicklung eines nach der Erfindung gestalteten Laufstreifenprofiles.

Die erste Ausführungsform der Erfindung wird nun anhand der Figuren 1 und 2 näher erläutert Beide Zeichnungsfiguren zeigen dabei schematisch einen Profilblock, wie er in Laufstreifenprofilen von Fahrzeugluftreifen enthalten sein kann. Solche Profilblöcke können beispielsweise die in Fig. 1 dargestellte rechteckige oder die in Fig. 2 dargestellte parallelogrammförmige Grundgestalt aufweisen. Die tatsächliche Blockform in einem Laufstreifenprofil kann von der vereinfachten Grundgestalt der Figuren 1 und 2 etwa dahingehend abweichen, daß die Eckkanten mit Abschrägungen versehen sind oder die Profilblockkanten nicht exakt parallel zueinander verlaufen. Der in Fig. 1 und Fig. 2 dargestellte Profilblock 1, 1' besitzt Profilblockkanten 1a, 1b, 1'a, 1'b, wobei die Profilblockkanten 1b, 1'b jene sind, die in der Umfangsrichtung des Laufstreifenprofiles ausgerichtet sind, die Profilblockkanten 1a würden in axialer Richtung verlaufen, und die Profilblockkanten 1'a wären gegenüber der Axialrichtung des Reifens unter einem spitzen Winkel geneigt. Der Profilblock 1 ist mit einer Vielzahl von Lamellenfeineinschnitten 2 versehen, die, in Draufsicht betrachtet, der Kontur von mehreren ineinander geschachtelten Doppel-T-Trägern folgen. Dabei ist im vorliegenden Ausführungsbeispiel nach Fig. 1 die Anordnung so getroffen, daß zwei Doppel-T-Träger-Konturen Einzelelemente bilden, deren beide Balkenteile jeweils parallel zu den Blockkanten 1a und deren Verbindungsstege parallel zu den Blockkanten 1b verlaufen, zwei weitere Doppel-T-Träger-Konturen bilden Einzelelemente, deren zumindest einer Balkenteil im Freiraum zwischen den Balkenteilen jener Einzelelemente liegt, deren Verbindungsstege in Umfangsrichtung, also parallel zu den Blockkanten 1b, verlaufen. Die Dimensionierung der Einzelelemente ist in diesem Ausführungsbeispiel so getroffen, daß jeweils ein Balkenteil entweder mit den Blockkanten 1a oder den Blockkanten 1b abschließt. Wie dargestellt, ist eine Kombination mit weiteren Feineinschnitten 3 möglich, und zwar insbesondere dort, wo es zweckmäßig sein kann, Kanten von Balkenteilen mit Profilblockkanten zu verbinden. Es können jedoch die Feineinschnitte 2 selbst bis zu den Profilblockkanten verlaufen, wodurch die "Balken" eine bezüglich der Verbindungsstege asymmetrische Gestalt erhalten.

Sämtliche Feineinschnitte 2, 3 weisen eine Tiefe auf, die vorzugsweise mindestens 30 % der sonstigen Profiltiefe beträgt Die Breite dieser Feineinschnitte 2, 3 wird im Bereich zwischen 0,3 und 0,8, insbesondere zwischen 0,4 bis 0,6 mm, gewählt. Die geschilderte Anordnung der Feineinschnitte 2 schafft eine Feineinschnittdichte, die in Axialrichtung und in Umfangsrichtung des Laufstreifenprofiles hoch ist. Die Feineinschnitte 2 bilden durch ihre Anordnung im Profilblock 1 Elemente, die eine hohe Biegesteifigkeit sowohl in Umfangsrichtung als auch in Axialrichtung aufweisen, was auf den gesamten Profilblock 1 übertragen, die Anfälligkeit des Profilblockes 1, sich beim Auftreten von Biegekräften zu deformieren, was ein schlechtes Fahrverhalten nach sich zieht, erheblich vermindert. Gleichzeitig hat der Profilblock 1 eine hohe Anzahl von Griffkanten, was insbesondere für Laufstreifenprofile, die für den Wintereinsatz geeignet sein sollen, günstig ist.

Die in Fig. 1 dargestellten Doppel-T-Träger-förmigen Einzelelemente haben untereinander gleiche Dimensionierung. Abweichend von dieser dargestellten Ausführungsform können jedoch auch Doppel-T-Träger-förmige Einzelelemente miteinander kombiniert werden, die unterschiedlich dimensioniert sind. Dabei ist es ferner möglich, Feineinschnitte in einem Profilblock so anzuordnen, daß im Profilblock ein einziges Doppel-T-Träger-förmiges Element gebildet wird. Hier stehen dem Fachmann eine Vielzahl von Möglichkeiten offen, die Biegesteifigkeit des Profilblockes, beispielsweise je nach dem ob es sich um einen eher in Schulternähe oder in Laufstreifenprofilmitte befindlichen Block handelt, entsprechend zu beeinflussen, oder auch die Einschnittdichte in Umfangs- bzw. in Querrichtung entsprechend zu verändern.

Bei dem in Fig. 2 dargestellten Profilblock 1' sind die durch Feineinschnitte 2' gebildeten Doppel-T-Träger-förmigen Einzelelemente der Feineinschnitte 2' der Parallelogrammform des Blockes angepaßt worden. Demnach sind in diesem Profilblock 1' Feineinschnitte 2' vorhanden, die Einzelelemente schaffen, deren Verbindungsstege in Umfangsrichtung verlaufen und deren Balkenteile parallel zu den gegenüber der Axialrichtung schräggestellten Profilblockkanten 1'a verlaufen, andererseits sind auch, in Draufsicht betrachtet, Einzelelemente geschaffen, deren Balkenteile in Umfangsrichtung orientiert sind und deren Verbindungsstege parallel zu den Profilblockkanten 1'a angeordnet sind. Dies hat Auswirkungen auf die Griffeigenschaften, da etwa bei Geradeausfahrt das Traktionsverhalten von den in die Axialrichtung projezierten Längenkomponenten jener Feineinschnittabschnitte beeinflußt wird, die parallel zu den Profilblockkanten 1'a verlaufen.

Fig. 3 zeigt eine Anordnung von Doppel-T-Träger-förmigen Einzelelementen in einem Laufstreifenband 4. Derartige, in Umfangsrichtung kontinuierlich umlaufende Laufstreifenbänder werden insbesondere im Laufstreifenmittelbereich angeordnet. Die Feineinschnitte 2' bilden im Laufstreifenband 4 zwei Reihen von Doppel-T-Trägerförmigen Einzelelementen, wobei innerhalb jeder Reihe diese Einzelelemente unmittelbar aneinander anschließen und je zwei Balkenteile aus der einen Reihe paßgenau zwischen den Balkenteilen eines Einzelelementes der anderen Reihe angeordnet sind.

Ein weiteres Ausführungsbeispiel der Erfindung wird nun anhand der Figuren 4 und 5 erörtert. Dabei ist in Fig. 4 wiederum die Draufsicht auf einen rechteckförmigen Profilblock 11 und in Fig. 5 auf einen parallelogrammförmigen Profilblock 11' dargestellt. Der Profilblock 11 ist mit Feineinschnitten 12 versehen. Durch das dargestellte Netz, das durch den Verlauf der Feineinschnitte 12 gebildet wird, werden im Profilblock 11 in diesem Ausführungsbeispiel vier annähernd Doppel-T-Träger-förmige Einzelelemente gebildet. Diese Einzelelemente entstehen dadurch, daß sowohl in Axialrichtung als auch in Umfangsrichtung den Profilblock 11 in Wellenform durchquerende Feineinschnitte 12 vorgesehen sind, derart, daß benachbarte Feineinschnitte 12 gegenläufige Wellenformen besitzen, so daß jeweils die Wellentäler und die Wellenberge einander zugeordnet sind. Fig. 5 zeigt diese Anordnung der Feineinschnitte 12' für einen parallelogrammförmigen Profilblock 11'.

Fig. 6 zeigt eine mögliche Ausgestaltung eines Laufstreifenprofiles mit Profilblöcken, die gemäß dem Ausführungsbeispiel nach Fig. 2 gestaltet sind. Dieses Laufstreifenprofil ist als sogenanntes gepfeiltes bzw. drehrichtungsgebundenes Profil ausgebildet und setzt sich aus vier Blockreihen mit jeweils zumindest im wesentlichen parallelogrammförmigen Profilblöcken 21 zusammen, durch deren Anordnung drei gerade und in Reifenumfangsrichtung verlaufende Umfangsnuten 5 und über die Laufstreifenbreite B betrachtet, im wesentlichen entlang von V-förmigen Kurven verlaufende seitliche Rillen 6 gebildet werden.

Es wird darauf verwiesen, daß die vorliegende Erfindung auf die dargestellten Ausführungsbeispiele nicht eingeschränkt ist So ist es insbesondere möglich, die Erfindung auch bei Laufstreifenprofilen einzusetzen, wo Blockreihen mit Laufstreifenbändern kombiniert werden. Dabei ist es selbstverständlich denkbar, bei ein und demselben Laufstreifenprofil eine Kombination von Profilelementen mit nach der Erfindung gestalteten Feineinschnitten mit Profilelementen, die herkömmliche oder andere Feineinschnittgestaltungen aufweisen, vorzusehen. Wie oben erwähnt, können durch die Anordnung und die Anzahl der Feineinschnitte insbesondere die Blockprofilbiegesteifigkeit und das Griffverhalten beeinflußt werden. Es wird schließlich noch darauf verwiesen, daß nach der Erfindung gestaltete Feineinschnitte abschnittsweise eine verringerte Tiefe aufweisen können.

## Patentansprüche

1. Fahrzeugreifen mit einem Laufstreifenprofil, welches Profilelemente, wie Profilblöcke oder in Reifenumfangsrichtung verlaufende Laufstreifenbänder aufweist, die mit einer Vielzahl von Feineinschnitten versehen sind, dadurch gekennzeichnet, daß Profilelemte (1, 1', 11, 11', 21) mit Feineinschnitten (2, 2', 2'', 12, 12') vorgesehen sind, durch die Einzelelemente mit einer zumindest annähernd Doppel-T-Träger-förmigen Gestalt gebildet sind.

2. Fahrzeugreifen nach Anspruch 1, dadurch gekennzeichnet, daß im Laufstreifenprofil Profilblöcke angeordnet sind, die ein einziges Einzelelement mit einer zumindest annähernd Doppel-T-Träger-förmigen Gestalt aufweisen.

3. Fahrzeugreifen nach Anspruch 1, dadurch gekennzeichnet, daß das Laufstreifenprofil Profilblöcke (1, 1', 11, 11', 21) aufweist, die jeweils mehrere Einzelelemente mit einer zumindest annähernd Doppel-T-Träger-förmigen Gestalt aufweisen, wobei jeweils zumindest zwei Einzelelemente derart angeordnet sind, daß ein Balkenteil im Freiraum zwischen den Balkenteilen des zweiten Einzelelementes liegt.

4. Fahrzeugreifen nach Anspruch 1, dadurch gekennzeichnet, daß im Laufstreifenprofil zumindest ein Laufstreifenband (4) angeordnet ist, in welchem die zumindest annähernd Doppel-T-Träger-förmigen Einzelelemente in zwei in Umfangsrichtung verlaufenden Reihen angeordnet sind, wobei innerhalb jeder Reihe die Doppel-T-Träger-Einzelelemnte unmittelbar aneinander anschließen und je zwei Balkenteile von in der einen Reihe in Umfangsrichtung unmittelbar aufeinanderfolgenden Einzelelementen paßgenau zwischen den Balkenteilen der Einzelelemente der anderen Reihe angeordnet sind.

5. Fahrzeugreifen nach einem der Ansprüche 1 bis 4, dadurch gekennzeichnet, daß die Profilblockkanten bzw. die Laufstreifenbandkanten zum Teil die Außenkonturen der Doppel-T-Träger-förmigen Einzelelemente bilden.

6. Fahrzeugreifen nach einem der Ansprüche 1 bis 5, dadurch gekennzeichnet, daß die innerhalb eines Profilblockes oder eines Laufstreifenbandes angeordneten Doppel-T-Träger-förmigen Einzelelemente zumindest im wesentlichen gleich dimensioniert sind.

## Claims

1. Vehicle tyre, having a tread surface profile which includes profile elements, such as profile blocks or tread strip bands which extend in the circumferential direction of the tyre and are provided with a plurality of fine incisions, characterised in that profile elements (1, 1', 11, 11', 21) are provided with fine incisions (2, 2', 2'', 12, 12'), which form individual elements having at least approximately a double-T-shaped configuration.

2. Vehicle tyre according to claim 1, characterised in that profile blocks are disposed in the tread strip profile and include a single individual element having at least approximately a double-T-shaped configuration.

3. Vehicle tyre according to claim 1, characterised in that the tread strip profile includes profile blocks (1, 1', 11, 11', 21), which are each provided with a plurality of individual elements having at least approximately a double-T-shaped configuration, at least two individual elements at a time being so disposed that one bar member lies in the space between the bar members of the second individual element.

4. Vehicle tyre according to claim 1, characterised in that at least one tread strip band (4) is disposed in the tread strip profile, and the individual elements, which have at least approximately a double-T-shaped configuration, are disposed in said band in two rows which extend in the circumferential direction, the double-T-shaped individual elements communicating directly with one another within each row, and every two bar members of individual elements, which directly succeed one another in the one row when viewed with respect to the circumferential direction, are disposed with an accurate fitting between the bar members of the individual elements of the other row.

5. Vehicle tyre according to one of claims 1 to 4, characterised in that the profile block edges, or respectively the tread strip band edges, partially form the outlines of the double-T-shaped individual elements.

6. Vehicle tyre according to one of claims 1 to 5, characterised in that the double-T-shaped individual elements, which are disposed internally of a profile block or a tread strip band, have at least substantially identical dimensions.

## Revendications

1. Bandage pneumatique pour véhicule, muni d'éléments de profilage tels que des blocs profilés ou des bandes de surface de roulement s'étendant dans le sens circonférentiel du pneumatique, et présentant un grand nombre de minces entailles, caractérisé par la présence d'éléments de profilage (1, 1', 11, 11', 21) à entailles minces (2, 2', 2'', 12, 12') par lesquelles sont formés des éléments individuels possédant une configuration se présentant, au moins approximativement, comme un support en double T.

2. Bandage pneumatique pour véhicule, selon la revendication 1, caractérisé par le fait que des blocs profilés, comportant un unique élément individuel possédant une configuration se présentant, au moins approximativement, comme un support en double T, sont disposés dans le profil de la surface de roulement.

3. Bandage pneumatique pour véhicule, selon la revendication 1, caractérisé par le fait que le profil de la surface de roulement présente des blocs profilés (1, 1', 11, 11', 21) respectivement munis de plusieurs éléments individuels possédant une configuration se présentant, au moins approximativement, comme un support en double T, au moins deux éléments individuels étant respectivement disposés de telle sorte qu'une partie transversale se trouve dans l'espace libre situé entre les parties transversales du second élément individuel.

4. Bandage pneumatique pour véhicule, selon la revendication 1, caractérisé par le fait que le profit de la surface de roulement présente au moins une bande (4) de surface de roulement dans laquelle les éléments individuels, au moins approximativement configurés en un support en double T, sont agencés en deux rangées s'étendant dans le sens circonférentiel ; bandage dans lequel, à l'intérieur de chaque rangée, les éléments individuels formant support en double T se rattachent directement les uns aux autres, et deux parties transversales respectives d'éléments individuels se succédant directement dans le sens circonférentiel, dans l'une des rangées, sont interposées avec ajustement précis entre les parties transversales des éléments individuels de l'autre rangée.

5. Bandage pneumatique pour véhicule, selon l'une des revendications 1 à 4, caractérisé par le fait que les arêtes des blocs profilés ou, respectivement, les arêtes des bandes de surface de roulement forment, au moins en partie, les contours extérieurs des éléments individuels configurés en un support en double T.

6. Bandage pneumatique pour véhicule, selon l'une des revendications 1 à 5, caractérisé par le fait que les éléments individuels configurés en un support en double T, situés à l'intérieur d'un bloc profité ou d'une bande de surface de roulement, sont au moins pour l'essentiel d'un dimensionnement identique.
